# EUROPEAN PATENT SPECIFICATION

(11) **EP 3 339 849 B1**
(45) Date of publication and mention of the grant of the patent: **10.03.2021**
(21) Application number: 16836885.0
(22) Date of filing: 01.07.2016
(51) Int. Cl.: G01N 27/333, G01N 27/416, G01N 27/06, G01N 35/00

(54) **ION CONCENTRATION MEASUREMENT DEVICE**
IONENKONZENTRATIONSMESSVORRICHTUNG
DISPOSITIF DE MESURE DE CONCENTRATION D'IONS

(30) Priority: 20.08.2015 JP 2015162451
(43) Date of publication of application: 27.06.2018
(73) Proprietor: Hitachi High-Tech Corporation, Minato-ku Tokyo 105-6409 (JP)
(72) Inventor: WATANABE Yoshito, Tokyo 105-6409 (JP); OZAWA Satoshi, Tokyo 100-8280 (JP); ONO Tetsuyoshi, Tokyo 105-6409 (JP); MIYAKE Masafumi, Tokyo 105-6409 (JP)
(74) Representative: Strehl Schübel-Hopf & Partner
(86) International application number: PCT/JP2016/069617
(87) International publication number: WO 2017/029893

(56) References cited:
- EP-A1- 2 479 560
- EP-A2- 1 783 666
- WO-A1-2011/034169
- WO-A1-2014/181632
- JP-A- S54 119 989
- JP-A- 2003 530 135
- JP-A- 2005 114 697
- JP-A- 2012 002 504
- US-A1- 2004 173 456
- US-A1- 2014 132 274

## Description

### Technical Field

The present invention relates to an ion concentration measurement device that measures ions in biological samples, for example.

### Background Art

Examples of methods for analyzing concentrations of ions in biological samples (e.g. blood serums and urine) include coulometric titration, flame photometry, and ion selective electrode methods. The ion selective electrode method is presently widely used, because just immersing an ion selective electrode together with a reference electrode into a sample solution enables the determination of the concentration of an ion in a sample.

A reduction in size and automation of the ion concentration measurement device are possible. With the use of these advantages, the ion concentration measurement device is installed in a biochemical automatic analyzer for use in the field of clinical examinations. The ion concentration measurement device that adopts ion selective electrode methods has ion selective electrodes and reference electrodes corresponding to ions targeted for measurement. The ion concentration measurement device of this type measures the concentrations of various ions in a sample by measuring the difference between the potential observed in the ion selective electrode and the potential observed in the reference electrode (potential difference).

On the other hand, clinical examination devices are required to record information (identification codes, periods of use, use states, and any other pieces of data) relating to devices and use conditions, for example, in order to reduce medical errors and to make prompt response when errors occur. In order to meet this request, a method is proposed in which a storage medium that records information of this type is mounted on an ion selective electrode cartridge (e.g. see Patent Literature 1). In the case of this method, even though a device fails, a cartridge is dismounted from the faulty device, and again mounted on another device. This allows the continuation of measurement with information recorded on the storage medium of the faulty device moved on the replaced device.

### Citation List

### Patent Literature

Patent Literature 1: International Publication No. WO/2011/034170

US 2014/132274 A1 discloses an electrolyte measurement system including memories on removable electrodes for storing usage information. EP 2 479 560 A1 discloses a similar automatic analyzer for ion concentration measurements, storing and updating the number of use times on the measurement cartridges.

### Summary of Invention

### Technical Problem

Nowadays, attention is also paid to systems that can read and write information with IC tags. Mechanisms of this type can also be applied to reading and writing information on a storage medium on the cartridge described above. However, the impedance of the electrode mounted on the cartridge is high. Thus, when information is read and written in measurement of the concentrations of ions, radio waves (electromagnetic waves) generated in the measurement affect the measured result of a potential difference. Specifically, radio waves (electromagnetic waves) generated in reading and writing information are mixed as noise into the measured result to degrade measurement accuracy.

### Solution to Problem

In order to solve the problems, the present invention adopts configurations, as defined by the appended claims.

### Advantageous Effects of Invention

In accordance with the present invention, also in the case where the semiconductor memory is mounted on the cartridge side, the measurement of concentrations of ions is enabled without consideration of the degradation of accuracy. Objects, configurations, and effects other than those described above will be apparent from the description of embodiments and examples below.

### Brief Description of Drawings

Fig. 1A is a view of an exemplary configuration of the appearance of a cartridge mounted with an electrode.
Fig. 1B is a view of an exemplary configuration of the appearance of the cartridge mounted with the electrode.
Fig. 1C is a view of the cartridge mounted with the electrode, the cartridge being cut along chain line I-I (Fig. 1A).
Fig. 2 is a view of the schematic configuration of an ion concentration measurement device used in Example 1.
Fig. 3 is a flowchart describing a first exemplary operation (measurement of a standard solution) by the ion concentration measurement device illustrated in Fig. 2.
Fig. 4 is a timing chart corresponding to the first exemplary operation.
Fig. 5 is a flowchart describing a second exemplary operation (measurement of an internal standard solution) by the ion concentration measurement device illustrated in Fig. 2.
Fig. 6 is a flowchart describing a third exemplary operation (measurement of a specimen) by the ion concentration measurement device illustrated in Fig. 2.
Fig. 7 is a flowchart describing a fourth exemplary operation (continuous measurement) by the ion concentration measurement device illustrated in Fig. 2.
Fig. 8 is a flowchart describing a fifth exemplary operation (another example of transmit and receive timing) by the ion concentration measurement device illustrated in Fig. 2.
Fig. 9 is a flowchart describing a sixth exemplary operation (another example of transmit and receive timing) by the ion concentration measurement device illustrated in Fig. 2.
Fig. 10 is a timing chart corresponding to the sixth exemplary operation.
Fig. 11 is a view of the schematic configuration of an ion concentration measurement device used in Example 2.
Fig. 12 is a flowchart describing a first exemplary operation (measurement of a standard solution) by the ion concentration measurement device illustrated in Fig. 11.
Fig. 13 is a flowchart describing a second exemplary operation (measurement of an internal standard solution) by the ion concentration measurement device illustrated in Fig. 11.
Fig. 14 is a flowchart describing a third exemplary operation (measurement of a specimen) by the ion concentration measurement device illustrated in Fig. 11.
Fig. 15 is a flowchart describing a fourth exemplary operation (another example of transmit and receive timing) by the ion concentration measurement device illustrated in Fig. 11.
Fig. 16 is a flowchart describing a fourth exemplary operation (another example of transmit and receive timing) by the ion concentration measurement device illustrated in Fig. 11.
Fig. 17 is a view of an example in which a memory is mounted on a reagent container.
Fig. 18 is a view of another exemplary configuration of an ion concentration measurement device (an example having a plurality of information reader/writers).
Fig. 19 is a diagram illustrating an example in which connection is established to a semiconductor memory through wired communication paths in independent terminal mode.
Fig. 20 is a diagram illustrating an example in which connection is established to a semiconductor memory through a wired communication path in shared terminal mode.

### Description of Embodiments and Examples

In the following, examples of the present invention will be described with reference to the accompanying drawings. Note that, the accompanying drawings illustrate specific examples based on the principle of the present invention. However, these drawings are provided for understanding the present invention, which should not be used for interpretation of the present invention in a limited manner.

### (1) Configuration of a Cartridge

First, an exemplary configuration of an ion selective electrode cartridge to be mounted on an ion concentration measurement device will be described. In the case of the example, the cartridge is a cartridge detachably mountable on the device main body of the ion concentration measurement device by a user. Thus, in the case where the ion concentration measurement device fails, the user can dismount the cartridge from the device main body and mount the cartridge on another ion concentration measurement device. The cartridge may, of course, be designed not to be dismountable from the ion concentration measurement device except by experts working maintenance.

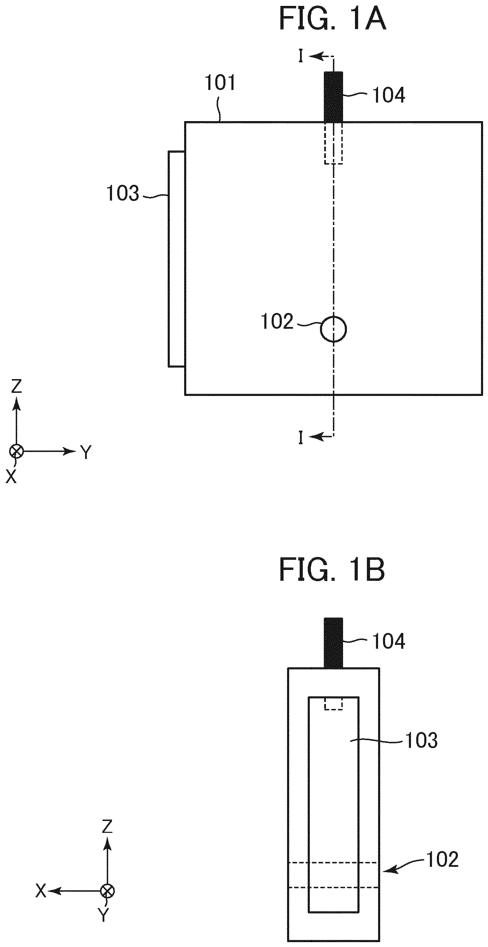

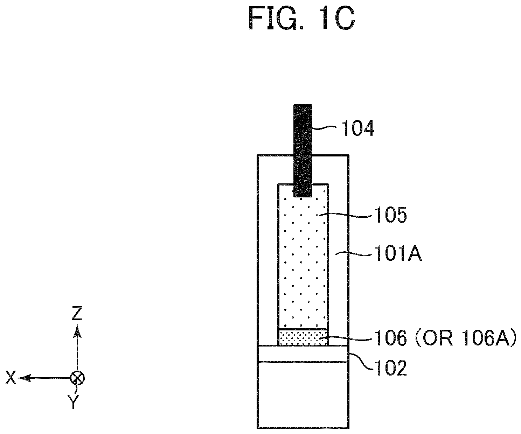

Fig. 1A is one of six side views of a cartridge 101, illustrating a side (a Z-Y plane) where the opening of a passage 102 is formed. Fig. 1B illustrates a side (a Z-X plane) viewed from the direction orthogonal to the passage 102 formed penetrating the cartridge 101. Fig. 1C is a cutaway cross sectional view (a Z-X plane) of the cartridge 101 along chain line I-I illustrated in Fig. 1A. As illustrated in Figs. 1A to 1C, an ion selective electrode according to the example is configured of the cartridge 101, the passage 102, an IC tag 103, an internal electrode 104, an internal solution 105, and a sensitive membrane 106. The appearance of the cartridge 101 has a rectangular cuboid shape. The IC tag 103 is mounted on one of the side surfaces of the cartridge 101. The cartridge 101 mounted with an ion selective electrode (a first electrode) corresponding to an ion targeted for measurement and the cartridge 101 mounted with a reference electrode (a second electrode) have basically the same configuration except the points below. That is, the ion selective electrode includes a sensitive membrane 106 that selectively responds to a target ion. The reference electrode includes a sensitive membrane 106 that responds to an ion contained in a reference electrode solution in a certain amount or a reference electrode membrane 106A that outputs a constant potential not depending on the concentration of an ion contained in a sample. Therefore, in the following, the ion selective electrode and the reference electrode are simply generically named as "the electrode".

Figs. 1A to 1C illustrate the structure in the case where one electrode is mounted in one cartridge 101. In this case, the ion selective electrode and the cartridge 101 have one-to-one correspondence. Therefore, in the following, the electrode and the cartridge 101 mounted with the function of the electrode are basically used as the same meaning. On the other hand, a configuration can also be considered in which a plurality of electrodes are mounted in one cartridge 101. In this case, a plurality of types of ion selective electrodes (first electrodes) may be mounted on one cartridge 101, or one or a plurality of the ion selective electrodes (the first electrodes) and the reference electrode (the second electrode) may be mounted on one cartridge 101. As described above, in the case where a plurality of electrodes are mounted on one cartridge 101, a plurality of containers 101A corresponding to the number of types of electrodes are included in the cartridge 101. Note that, in the case where a plurality of electrodes are mounted on the cartridge 101, one IC tag 103 only has to be mounted on the cartridge 101.

The cartridge 101 is configured of a resin, such as polyvinyl chloride, polystyrene, and polypropylene. The passage 102 is formed as a tube into which a solution containing a target substance to be measured is introduced, and penetrates from one side surface to the other side surface of the cartridge 101. The diameter of the passage 102 ranges from about 0.1 to 1 mm (millimeter), for example, and the capacity ranges from about a few picoliters to a few microliters, for example. The container 101A is formed in the inside of the cartridge 101. The container 101A has a capacity of about a few milliliters, for example. The bottom part of the container 101A is formed of the sensitive membrane 106. The inner side of the container 101A is in contact with the passage 102 through the sensitive membrane 106. The container 101A is filled with the internal solution 105. The internal solution 105 is in contact with one end of the internal electrode 104. The internal electrode 104 (the end portion in contact with the internal solution) is configured of silver/silver chloride, platinum, and any other substance, for example. The internal electrode 104 (the end portion not in contact with the internal solution) also serves as the output terminal of the electrode.

For the internal solution 105, a mixture of graphite and liquid oil, for example, is used. For the mixture, a mixture of graphite and liquid oil mixed at a weight ratio of 1:2, for example, is used. Note that, a mortar is used for mixing graphite with liquid oil. The liquid oil is preferably in a liquid state at a temperature of 0 to 50°C that is a use environment. Since the liquid oil is a liquid state, the following is expected: (1) the improvement of response to a monovalent cation; (2) the securement of adhesion to the sensitive membrane 106; and (3) the improvement of moving speed of ions in the liquid. The liquid oil is not necessarily in liquid in the entire temperature range described above as long as the liquid is in a liquid state under the use conditions. For the liquid oil, substances that are not mixed with water can be used (e.g. alkane, such as paraffin, plasticizers, such as DOA, DOP, DOS, and oNPOE, described in Pure Appl. Chem., Vol. 72, No. 10, pp. 1851-2082, 2000, fluorine polymers, and fluorine oil). In the case where an aqueous solution is used for the internal solution 105, various electrolyte aqueous solutions, which are known as so-called salt bridges, containing a measurement targeted ion can be used. Specifically, a gel internal solution having a polymer, such as agarose, added to an electrolyte aqueous solution is preferably usable because of high mechanical stability. The addition of a substance, boracic acid, for example, having a preservative effect enables a reduction in the proliferation of various germs in the internal solution for a long-term preservation.

For the sensitive membrane 106, ion selective membranes for lithium, sodium, potassium, and any other substances described in Pure Appl. Chem., Vol. 72, No. 10, pp. 1851-2082, 2000 are used. In addition to these ion selective membranes used for the sensitive membrane 106, ion selective membranes that selectively pass chlorine, calcium, magnesium, bicarbonate, zinc, copper, and iron can also be used.

The IC tag 103 has a configuration in which an IC chip having a transmitter circuit, a small-scale logic circuit, and a semiconductor memory is mounted on a substrate and these components are sealed with a resin. The place to mount the IC tag 103 is not limited to the place shown in the drawings. The IC tag 103 can be mounted on a given place on the cartridge 101 other than the places where the passage 102 and the internal electrode 104 are located. The IC tag 103, after insulated, for example, can also be mounted in the internal solution 105.

In the invention, an RFID (Radio Frequency Identification) tag is adopted as the IC tag 103. In other examples related to the invention, however, not falling within the scope of the claimed invention, the IC tag 103 is not limited to RFID tags. Such examples of IC tags that can be used include IC tags that can read information in a non-contact manner, IC tags that can write information in a non-contact manner, and IC tags that can read and write information in a non-contact manner. The IC tag 103 may establish communication with the outside through electric wires (wired paths). The IC tag 103 may be mounted with a read-only semiconductor memory. In this case, the IC tag 103 is mounted with a transmitter circuit connected to an antenna. The read-only semiconductor memory (ROM: Read Only Memory) is preferable in the case where only static information is stored, like information unique to an electrode determined in manufacture of the IC tag 103 (e.g. working lifetime and an electrode slope value), information unique to the passage 102, and information unique to the container 101A.

The IC tag 103 can also be mounted with a readable and writable semiconductor memory. In this case, the IC tag 103 is also mounted with a receiving circuit. The readable and writable semiconductor memory is preferable in the case where dynamic information (e.g. information in transportation and storage, and information acquired or updated at every measurement) is stored, in addition to static information. Examples of the readable and writable semiconductor memory include a ROM referred to as a PROM (Programmable ROM) that is writable at least one time, a ROM referred to as an EPROM (Erasable ROM) that is reusable by deleting information with ultraviolet rays, for example, a ROM referred to as an EEPROM (Electrically Erasable Programmable ROM) that is reusable by electrically deleting information, a memory referred to as a RAM (Random Access Memory) that is readable and writable, a RAM referred to as an SRAM (Static RAM) that needs no refresh, a RAM referred to as a DRAM (Dynamic RAM) that needs refresh, a flash memory (a non-volatile RAM), and a RAM referred to as an FRAM (Ferroelectric RAM) (trademark) that combines both of non-volatility and rapidity. In the examples to be described later, in the various memories described above, a flash memory or a FRAM (trademark) that can hold information with no power supply or refresh and can easily rewrite information is used for the IC tag 103.

RFID tags are roughly categorized into passive type ones and active type ones. The former operates by receiving radio waves, for example, from a reader/writer using the radio waves as an energy source, with no necessity of including any power supply. The latter is a tag including a power supply, and has a long communication range. In the examples to be described later, a passive type RFID tag is used, but in the invention a semi-active RFID tag is used. Semi-active type RFID tags have the features of both of the active type and the passive type. Typically, the active type RFID tag operates with a battery. Thus, the active type RFID tag has merits that a communication range is longer than that of the passive type RFID tag and data can be periodically transmitted regardless of access from an information reader/writer. Therefore, the active type RFID tag is often typically used for managing the locations of people and things.

However, when the active type RFID tag is applied to the IC tag 103 as it is, the timing of measuring the potential difference is highly likely to overlap the timing at which the RFID tag transmits radio waves (electromagnetic waves). As described above, this timing overlaps leads to the degradation of accuracy of the potential difference measurement result.

Therefore, in the examples to be described later, the IC tag 103 is mounted with an RFID that transmits no response radio waves (electromagnetic waves) as long as the RFID receives radio waves (electromagnetic waves) having strength at a certain level or more from the outside, for example. As described above, an IC tag 103 that is started in passive mode and includes a power supply is sometimes referred to as a semi-active type IC tag. In the invention, with the use of the semi-active type IC tag 103, merits of providing a wide communication range can be enjoyed while the overlap of the timing of measuring the potential difference with the timing at which transmits radio waves (electromagnetic waves) is avoided, and battery lifetime can also be prolonged.

The communication modes (carrier waves) used for reading information and/or writing information can adopt various electromagnetic waves, such as radio waves and electromagnetic induction. Electromagnetic induction and radio waves are specifically preferable. Various frequency bands can be adopted. In the case of the former, the 135 kHz band and the 13.56 MHz band can be used, and in the case of the latter, the 433 MHz band, the 900 MHz band, and the 2.45 GHz band can be adopted. For example, the 135 kHz band has performance that is historically long, and has merits that are resistant to moisture. On the other hand, for example, the 900 MHz band has merits of a long range that is a few meters with no use of a large antenna. The transmitter circuit and the receiving circuit are basically configured of an antenna, a tuning circuit, an amplifier circuit, and any other components. Various circuits for the communication modes are developed. The logic circuit may be configured by combining various semiconductor devices and any other devices, or the logic circuit may adopt an integrated circuit or a microprocessor, for example, suitable for the restrictions that are the content of processes and circuit sizes.

IC tags in any shapes including coins, laminates, and labels are applicable to the IC tag 103. The IC tag 103 can also be formed by directly printing the IC tag 103 on the cartridge 101. Note that, since the ion concentration measurement device uses an aqueous solution, the IC tag 103 more preferably has waterproof properties. The IC tag 103 may be detachable from the cartridge 101. When the IC tag 103 is detachable from the cartridge 101, the IC tag 103 can be dismounted from the cartridge 101 for reuse in collecting used cartridges 101 by a manufacturer, for example, and this enables a reduction in the manufacturing cost of the cartridge 101. In the case where the IC tag 103 is also adopted to other types of devices and components in wide use as the de facto standard and recycling markets are formed, IC tags 103 obtained from these recycling markets may be reused.

### (2) Example 1

### (2-1) Overall structure of the device

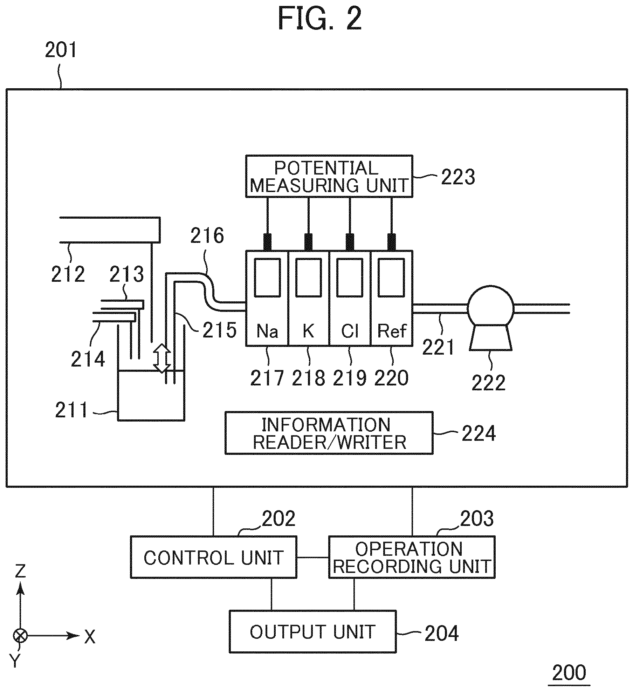

Fig. 2 illustrates an exemplary configuration of an ion concentration measurement device 200 mounted with the cartridge 101 described above. The ion concentration measurement device 200 has a measuring unit 201, a control unit 202, an operation recording unit 203, and an output unit 204. To the measuring unit 201, the control unit 202, the operation recording unit 203, and the output unit 204 are connected.

The measuring unit 201 includes a dilution tank 211, a specimen dispensing nozzle 212, a diluent dispensing nozzle 213, an internal standard solution dispensing nozzle 214, a suction nozzle 215, a tube 216, a sodium ion selective electrode cartridge 217, a potassium ion selective electrode cartridge 218, a chloride ion selective electrode cartridge 219, a reference electrode cartridge 220, a tube 221, a pump 222, a potential measuring unit 223, and an information reader/writer 224. The sodium ion selective electrode cartridge 217, the potassium ion selective electrode cartridge 218, the chloride ion selective electrode cartridge 219, and the reference electrode cartridge 220 all have the structure of the cartridge 101 described using Figs. 1A to 1C.

In the following, the sodium ion selective electrode cartridge 217, the potassium ion selective electrode cartridge 218, the chloride ion selective electrode cartridge 219, and the reference electrode cartridge 220 are sometimes generally referred to as "the cartridge". The sodium ion selective electrode cartridge 217, the potassium ion selective electrode cartridge 218, and the chloride ion selective electrode cartridge 219 are sometimes generally referred to as "the ion selective electrode cartridge".

The passages 102 (Figs. 1A to 1C) formed on the sodium ion selective electrode cartridge 217, the potassium ion selective electrode cartridge 218, the chloride ion selective electrode cartridge 219, and the reference electrode cartridge 220 are joined to each other to form one passage. The tube 216 is joined to one opening of the passage 102 of the sodium ion selective electrode cartridge 217. The tube 221 is joined to one opening of the passage 102 of the reference electrode cartridge 220.

The housing of the measuring unit 201 is applied with an electromagnetic shield. With the electromagnetic shield, the components in the measuring unit 201 can be operated with no influence of external electromagnetic noise. The specimen dispensing nozzle 212, the diluent dispensing nozzle 213, and the internal standard solution dispensing nozzle 214 are used for dispensing and discharging a blood serum specimen, a diluent, and an internal standard solution into the dilution tank 211, respectively. As indicated by arrows in the drawing, the suction nozzle 215 can be moved up and down to suck the solution in the dilution tank 211 by the driving force of the pump 222.

The solution sucked from the dilution tank 211 flows to the sodium ion selective electrode cartridge 217, the potassium ion selective electrode cartridge 218, the chloride ion selective electrode cartridge 219, and the reference electrode cartridge 220, the tube 221, and the pump 222 through the tube 216. The solution passed through the pump 222 is discarded. One ends of the internal electrodes 104 mounted on the sodium ion selective electrode cartridge 217, the potassium ion selective electrode cartridge 218, the chloride ion selective electrode cartridge 219, and the reference electrode cartridge 220 are all connected to the potential measuring unit 223. The information reader/writer 224 is placed near the sodium ion selective electrode cartridge 217, the potassium ion selective electrode cartridge 218, the chloride ion selective electrode cartridge 219, and the reference electrode cartridge 220.

### (2-2) Exemplary operations

In the following, the operation executed in the ion concentration measurement device 200 will be described. The flowcharts described later show the operation of the measuring unit 201 controlled by the control unit 202.

### (2-2-1) First exemplary operation (measurement of the standard solution)

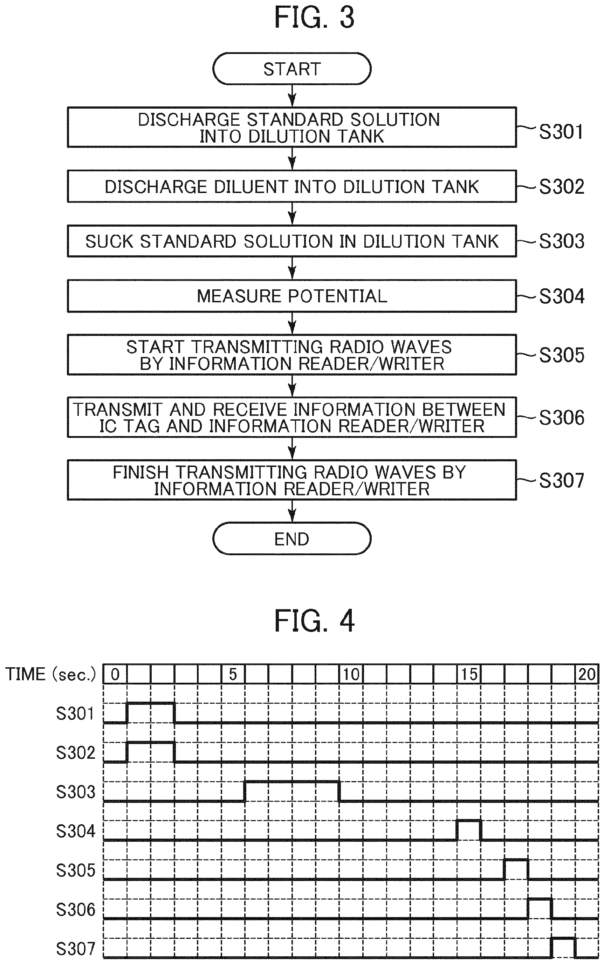

Fig. 3 illustrates an exemplary operation in the case of measuring the standard solution. Fig. 4 illustrates a timing chart corresponding to the exemplary operation. First, the measuring unit 201 discharges the standard solution into the dilution tank 211 using the specimen dispensing nozzle 212 (S301). Subsequently, the measuring unit 201 discharges the diluent into the dilution tank 211 using the diluent dispensing nozzle 213 (S302) . Thus, the standard solution is diluted. Note that, a method that does not dilute the standard solution with the diluent can also be adopted. In this case, the operation in S302 is omitted.

Subsequently, the measuring unit 201 sucks the standard solution in the dilution tank 211 using the suction nozzle 215 and the pump 222 (S303). Consequently, the passages 102 of the sodium ion selective electrode cartridge 217, the potassium ion selective electrode cartridge 218, and the chloride ion selective electrode cartridge 219, and the reference electrode cartridge 220 are filled with the standard solution. After this, the measuring unit 201 measures the potentials of the electrodes of the ion selective electrode cartridges (the sodium ion selective electrode cartridge 217, the potassium ion selective electrode cartridge 218, and the chloride ion selective electrode cartridge 219) on the basis of the reference electrode using the potential measuring unit 223. Specifically, the potential difference between the internal electrode 104 of the ion selective electrode cartridge and the internal electrode 104 of the reference electrode cartridge 220 is measured (S304). The potential is measured on the sodium ion selective electrode cartridge 217, the potassium ion selective electrode cartridge 218, and the chloride ion selective electrode cartridge 219 in a time sharing manner.

After measuring the potentials, the information reader/writer 224 starts transmitting radio waves (S305). In the transmitting, the measuring unit 201 transmits and receives information to be described later between the IC tags 103 mounted on the cartridges and the information reader/writer 224 (S306). After finishing transmitting and receiving the information, the measuring unit 201 ends transmitting radio waves by the information reader/writer 224 (S307).

As apparent from Figs. 3 and 4, the step of measuring the potentials of the electrodes (S304) is independent of any of the step of starting transmitting radio waves by the information reader/writer 224 (S305), the step of transmitting and receiving the information (S306), and the step of ending transmitting radio waves (S307) in terms of time. Therefore, potentials can be measured in high measurement accuracy with no influence on the potentials measured from the electrodes by radio waves transmitted from the information reader/writer 224 and the IC tag 103. Of course, information relating to the device, its use conditions, and any other information can be recorded on the IC tag 103. Note that, the operation of measuring the standard solution described above is performed on two kinds of standard solutions, and thus the sensitivity of the slopes of the electrodes can be determined from the measured potentials.

### (2-2-2) Second exemplary operation (measurement of the internal standard solution)

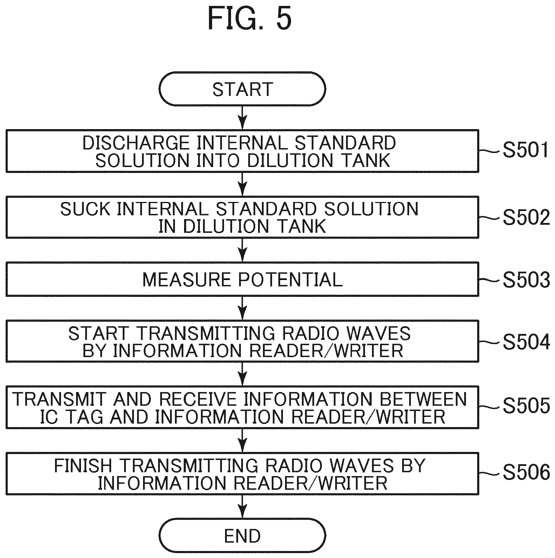

Fig. 5 illustrates an exemplary operation in the case of measuring the internal standard solution. First, the measuring unit 201 discharges the internal standard solution into the dilution tank 211 using the internal standard solution dispensing nozzle 214 (S501). Subsequently, the measuring unit 201 sucks the internal standard solution in the dilution tank 211 using the suction nozzle 215 and the pump 222 (S502). Thus, the passages 102 of the sodium ion selective electrode cartridge 217, the potassium ion selective electrode cartridge 218, and the chloride ion selective electrode cartridge 219, and the reference electrode cartridge 220 are filled with the internal standard solution.

After this, the measuring unit 201 measures the potentials of the electrodes on the basis of the reference electrode using the potential measuring unit 223 (S503). After measuring the potentials, the information reader/writer 224 starts transmitting radio waves (S504). In the transmitting, information is transmitted and received between the IC tags 103 mounted on the cartridges and the information reader/writer 224 (S505) . After finishing transmitting and receiving the information, the measuring unit 201 ends transmitting radio waves by the information reader/writer 224 (S506).

A timing chart corresponding to this exemplary operation is similar to Fig. 4. The main difference is that the step of discharging the internal standard solution is adopted, instead of the steps of discharging the standard solution and the diluent. The concentrations of ions contained in the internal standard solution are determined from the resulting potentials obtained from the operation of measuring the internal standard solution, the sensitivity of the slope, and the potential of the standard solution.

### (2-2-3) Third exemplary operation (measurement of the specimen)

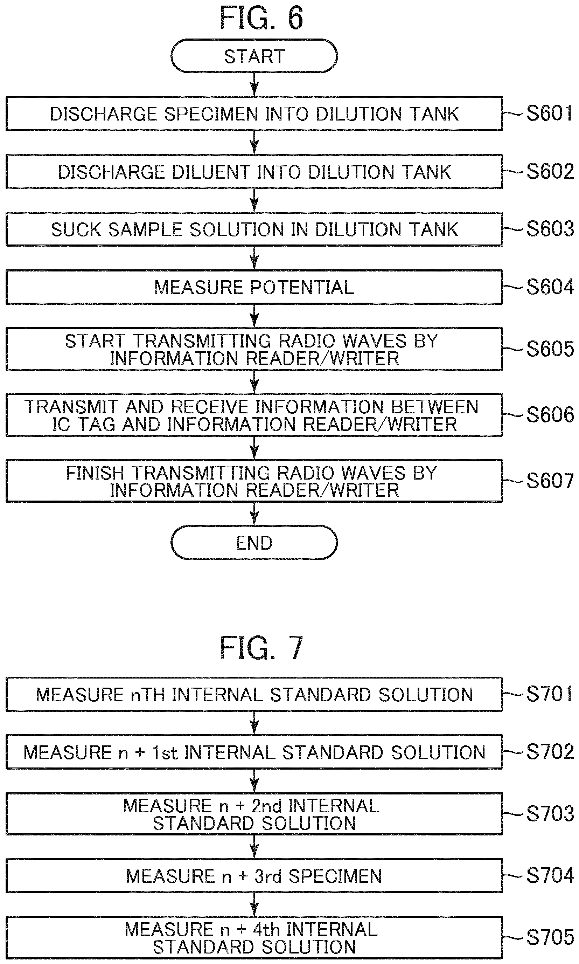

Fig. 6 illustrates an exemplary operation in the case of measuring the specimen. First, the measuring unit 201 discharges the specimen into the dilution tank 211 using the specimen dispensing nozzle 212 (S601). Subsequently, the measuring unit 201 discharges the diluent into the dilution tank 211 using the diluent dispensing nozzle 213 (S602) . Thus, the specimen is diluted. Note that, a method that does not dilute the specimen with the diluent can also be adopted. In this case, the operation in S602 is omitted.

Subsequently, the measuring unit 201 sucks the sample solution in the dilution tank 211 using the suction nozzle 215 and the pump 222 (S603). Thus, the passages 102 of the sodium ion selective electrode cartridge 217, the potassium ion selective electrode cartridge 218, and the chloride ion selective electrode cartridge 219, and the reference electrode cartridge 220 are filled with the sample solution containing the specimen.

After this, the measuring unit 201 measures the potentials of the electrodes on the basis of the reference electrode using the potential measuring unit 223 (S604). After measuring the potentials, the information reader/writer 224 starts transmitting radio waves (S605). In the transmitting, information is transmitted and received between the IC tags 103 mounted on the cartridges and the information reader/writer 224 (S606) . After finishing transmitting and receiving the information, the information reader/writer 224 ends transmitting radio waves (S607).

A timing chart in this case is also similar to Fig. 4. The main difference is that the step of discharging the specimen is adopted, instead of the step of discharging the standard solution. As described above, the concentrations of ions in the specimen are determined from the resulting potentials obtained from the operation of measuring the specimen, the sensitivity of the slope, and the potential and the concentration of the internal standard solution, and in consideration of the dilution ratio as necessary.

### (2-2-4) Fourth exemplary operation (continuous measurement)

In the first to the third exemplary operations, the standard solution, the internal standard solution, and the specimen are separately measured. However, these measurements can also be performed as a series of flows. Fig. 7 illustrates an exemplary operation in the case of continuously performing these measurements. First, the measuring unit 201 measures the internal standard solution (S701). This Step S701 corresponds to the steps illustrated in Fig. 5. Subsequently, the measuring unit 201 measures the standard solution (S702). This Step S702 corresponds to the steps illustrated in Fig. 3. After that, the measuring unit 201 measures the internal standard solution (S703). This Step S703 also corresponds to the steps illustrated in Fig. 5. Subsequently, the measuring unit 201 measures the specimen (S704). This Step S704 corresponds to the steps illustrated in Fig. 6. The measuring unit 201 measures the internal standard solution (S705) . This Step S705 also corresponds to the steps illustrated in Fig. 5.

In the case of continuous measurement, information about the nth measurement may be transmitted and received before the n+1st measurement. Information may be transmitted and received at idle time (standby time) that is timing at which a series of measurements is interrupted.

### (2-2-5) Fifth exemplary operation (another example of transmit and receive timing)

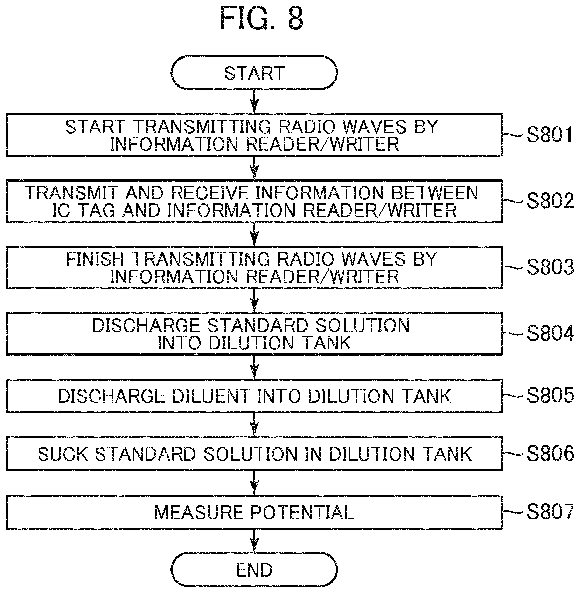

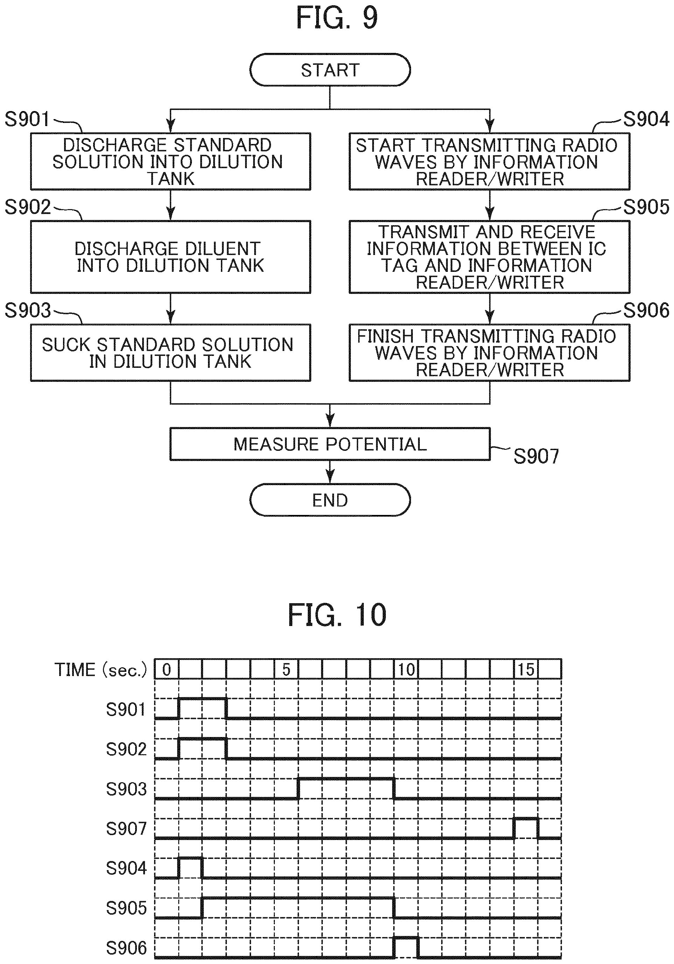

The timing of transmitting and receiving information is not limited after the measurement of the standard solution, the internal standard solution, and the specimen as in the first to the third exemplary operations . The timing may be any timing as long as the period of measuring the potential does not overlap the period of transmitting radio waves. For example, radio waves may be transmitted before measuring the potential as illustrated in Fig. 8. Alternatively, radio waves may be transmitted in parallel with pre-processing of potential measurement (discharging/sucking the solution) as illustrated in Fig. 9 or 10.

In Figs. 8 and 9, the case of measuring the standard solution is shown as an example. However, in the case of measuring the internal standard solution or the specimen, instead of the standard solution, radio waves are similarly transmitted. In this connection, as illustrated in Fig. 10, in the case where information is transmitted and received using radio waves before measuring the potential, transmitting and receiving information using radio waves in the subsequent communication cycle or later can be used in order to record the measured result of the potential acquired at a certain cycle.

### (2-3) Examples of pieces of information relating to measuring the concentrations of ions

Examples of pieces of information stored on the IC tag 103 include an ion type that is information unique to an electrode determined when manufactured, a lot number, a serial number, an expiration date, a date of manufacture, a correct output range, and alarm conditions, also include temporal profiles, such as temperature, humidity, atmospheric pressure, and acceleration, that are information in transportation and storage, and also include information that is acquired or updated at every measurement, such as a measurement facility, a measuring device, a person in charge of measurement, a measurement channel, a measurement date and time, types and compositions of used reagents (a standard solution and a diluent), pH, reaction time, stirring time, an aliquot quantity of a sample, an amount of a diluent, a dilution factor, an amount of an introduction solution, introduction time, an introduction flow, an introduction flow rate, temperature, humidity, pressure, measurement cycle time, measurement wait time, data acquisition time, the number of times of data acquisition, potential, concentrations of ions that are measurement results, impedance and resistance of electrodes, the number of samples to be measured, sensitivity of slopes, potential stability, repeatability, selectivity, a correction factor, time response characteristics, sensitivity, calibration curve remeasurement conditions, data processing algorithms, and replacement parts.

### (2-4) Exemplary operation of reading and writing information

Here, an exemplary operation of reading and writing information from time when manufactured to the collection of the cartridge 101 will be described. First, when the cartridge 101 is manufactured, electrode unique information is written to the IC tag 103. After that, information in transportation and storage provided by distributors or warehousemen, for example, is written to the IC tag 103 at each point in time. Note that, distributors or warehousemen can collect information in transportation and storage from another IC tag that is different from the IC tag 103 mounted on the cartridge 101 and mounted on boxes for distribution, containers, tracks, ships, and planes, for example, used in the process of distribution.

In the measurement of ion concentrations by the ion concentration measurement device 200, at least information that can identify the electrode, such as a serial number, in the electrode unique information is read from the IC tag 103. Information in transportation and storage can also be read as necessary. Information acquired or updated every time when measured is written to the IC tag 103 any time. Note that, a configuration may be possible in which unique information, information in transportation and storage, and information acquired or updated every time when measured are read from the IC tag 103 of the collected cartridge 101 and these pieces of information are used as information to improve the ion concentration measurement device.

### (2-5) Subconclusion

With the use of the ion concentration measurement device 200 according to the example, information relating to devices and its use conditions, for example, can be recorded on or read from the IC tag 103, with no degradation of high measurement accuracy. Information other than the measurement period (the measurement period of the potential difference) of the ion concentration can be used for reading and writing information on the IC tag 103. Thus, this enables efficient measurement work. Since information can also be frequently updated, the latest information can be acquired all the time and reflected to the operation of the device.

### (3) Second Embodiment

### (3-1) Overall structure of a device

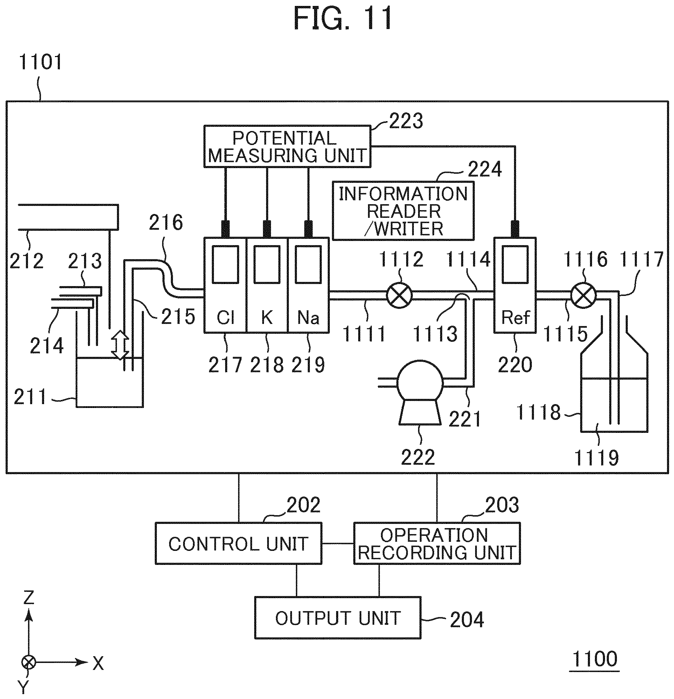

Fig. 11 illustrates an exemplary configuration of an ion concentration measurement device 1100 used in the example. Fig. 11 shows corresponding components in Fig. 2 with the same reference signs. The ion concentration measurement device 1100 basically has a configuration similar to Example 1. However, the following is different.

The first difference is that a reference electrode cartridge 220 (a second cartridge) is separated from an ion selective electrode cartridge (a first cartridge). Specifically, the ion selective electrode cartridge corresponds to a sodium ion selective electrode cartridge 217, a potassium ion selective electrode cartridge 218, and a chloride ion selective electrode cartridge 219. Thus, the chloride ion selective electrode cartridge 219 is connected to the reference electrode cartridge 220 in turn through a tube 1111, a valve 1112, a junction 1113, and a tube 1114. Note that, to the junction 1113, a pump 222 is connected through a tube 221.

The second difference is that the supply passage of a reference liquid 1119 is connected to the reference electrode cartridge 220. This supply passage is configured of a tube 1115, a valve 1116, and a tube 1117. Note that, the reference liquid 1119 is stored in a reference liquid container 1118. The opening and closing of the valves 1112 and 1116 are controlled by a control unit 202.

Also in the case of the example, a specimen dispensing nozzle 212 dispenses and discharges a blood serum specimen into a dilution tank 211, a diluent dispensing nozzle 213 dispenses and discharges a diluent into the dilution tank 211, and an internal standard solution dispensing nozzle 214 dispenses and discharges an internal standard solution into the dilution tank 211. A suction nozzle 215 can be moved up and down, and can suck the solution in the dilution tank 211 by the driving force of the pump 222.

In the case where the valve 1112 is opened and the valve 1116 is closed, the solution sucked by driving the pump 222 is introduced into the passage of the ion selective electrode cartridge through the tube 216, and discarded through the tube 1111, and the junction 1113, and the tube 221. On the other hand, in the case where the valve 1112 is closed and the valve 1116 is opened, the reference liquid 1119 is sucked by driving the pump 222 through the tube 1117, introduced into a passage 102 of the reference electrode cartridge 220, and discarded through the tube 1114, the junction 1113, and the tube 221.

One ends of internal electrodes 104 mounted on the sodium ion selective electrode cartridge 217, the potassium ion selective electrode cartridge 218, the chloride ion selective electrode cartridge 219, and the reference electrode cartridge 220 are all connected to a potential measuring unit 223. An information reader/writer 224 is placed near the sodium ion selective electrode cartridge 217, the potassium ion selective electrode cartridge 218, the chloride ion selective electrode cartridge 219, and the reference electrode cartridge 220.

### (3-2) Exemplary operations

In the following, operations performed in the ion concentration measurement device 1100 will be described. Flowcharts described later illustrate the operation of a measuring unit 1101 controlled by the control unit 202.

### (3-2-1) First exemplary operation (measurement of the standard solution)

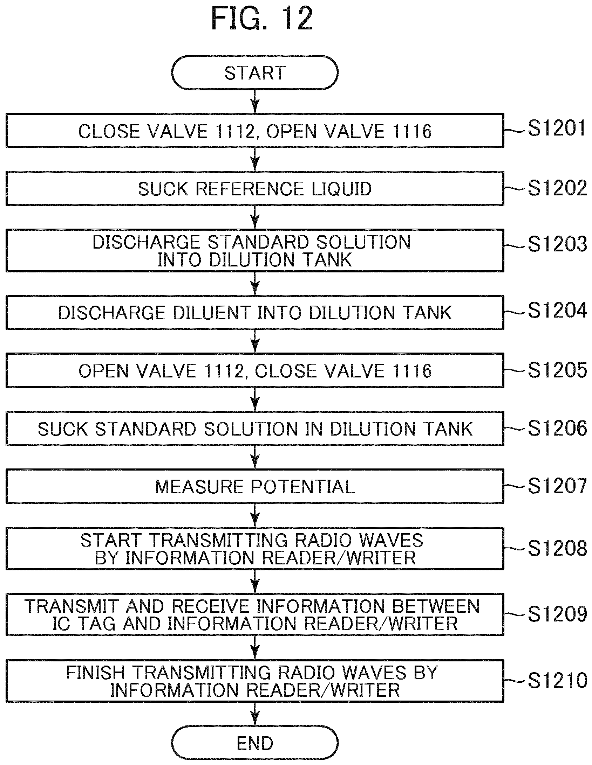

Fig. 12 illustrates an exemplary operation in the case of measuring the standard solution. First, the measuring unit 1101 closes the valve 1112 and opens the valve 1116 (S1201). Subsequently, the measuring unit 1101 sucks the reference liquid 1119 from the reference liquid container 1118 using the pump 222 (S1202). Thus, the passage 102 of the reference electrode cartridge 220, the tube 1114, and the junction 1113 are filled with the reference liquid 1119. After this, the measuring unit 1101 discharges the standard solution into the dilution tank 211 using the specimen dispensing nozzle 212 (S1203). Subsequently, the measuring unit 1101 discharges the diluent into the dilution tank 211 using the diluent dispensing nozzle 213 (S1204) . Thus, the standard solution is diluted. Note that, a method that does not dilute the standard solution with the diluent can also be adopted. In this case, the operation in S1204 is omitted.

After this, the measuring unit 1101 opens the valve 1112 and closes the valve 1116 (S1205). Subsequently, the measuring unit 1101 sucks the standard solution in the dilution tank 211 using the suction nozzle 215 and the pump 222 (S1206) . Thus, the passages 102 of the sodium ion selective electrode cartridge 217, the potassium ion selective electrode cartridge 218, and the chloride ion selective electrode cartridge 219, the tube 1111, and the junction 1113 are filled with the standard solution.

At this time, the ion selective electrode cartridge is connected to the reference electrode cartridge 220 through the tubes 111 and 1114 and the junction 1113 filled with the solution. Therefore, the measuring unit 1101 enables the measurement of the potentials of the electrodes of the ion selective electrode cartridges based on the reference electrode using the potential measuring unit 223 (S1207). The measurement of the potential is performed on the sodium ion selective electrode cartridge 217, the potassium ion selective electrode cartridge 218, and the chloride ion selective electrode cartridge 219 in a time sharing manner.

After measuring the potentials, the information reader/writer 224 starts transmitting radio waves (S1208) . In the transmitting, the measuring unit 1101 transmits and receives information between the IC tags 103 mounted on the cartridges and the information reader/writer 224 (S1209). After finishing transmitting and receiving the information, the measuring unit 1101 ends transmitting radio waves by the information reader/writer 224 (S1210). Note that, the operation of measuring the standard solution described above is performed on two kinds of standard solutions, and thus the sensitivity of the slopes of the electrodes can be determined from the measured potentials.

### (3-2-2) Second exemplary operation (measurement of the internal standard solution)

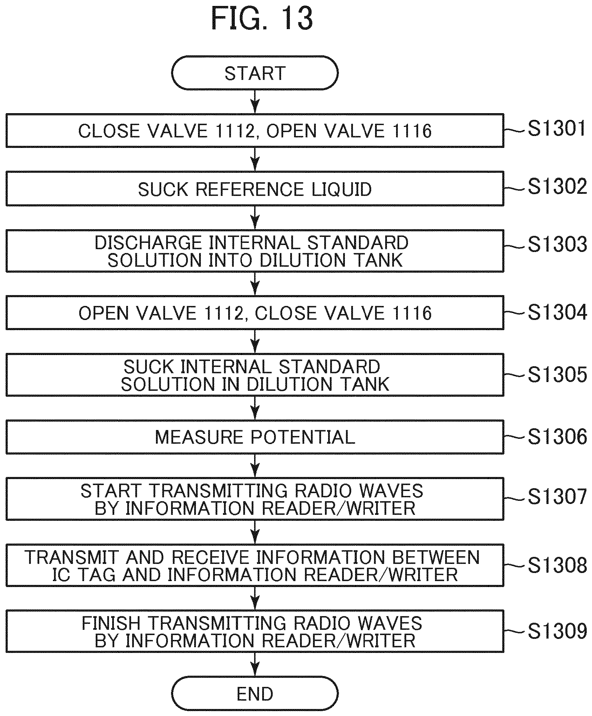

Fig. 13 illustrates an exemplary operation in the case of measuring the internal standard solution. First, the measuring unit 1101 closes the valve 1112 and opens the valve 1116 (S1301). Subsequently, the measuring unit 1101 sucks the reference liquid 1119 from the reference liquid container 1118 using the pump 222 (S1302). Thus, the passage 102 of the reference electrode cartridge 220, the tube 1114, and the junction 1113 are filled with the reference liquid 1119. After this, the measuring unit 1101 discharges the internal standard solution into the dilution tank 211 using the internal standard solution dispensing nozzle 214 (S1103). Thus, the internal standard solution is diluted.

After this, the measuring unit 1101 opens the valve 1112 and closes the valve 1116 (S1304). Subsequently, the measuring unit 1101 sucks the internal standard solution in the dilution tank 211 using the suction nozzle 215 and the pump 222 (S1305) . Thus, the passages 102 of the sodium ion selective electrode cartridge 217, the potassium ion selective electrode cartridge 218, and the chloride ion selective electrode cartridge 219, the tube 1111, and the junction 1113 are filled with the internal standard solution.

At this time, the ion selective electrode cartridge is connected to the reference electrode cartridge 220 through the tubes 111 and 1114 and the junction 1113 filled with the solution. Therefore, the measuring unit 1101 enables the measurement of the potentials of the electrodes of the ion selective electrode cartridges based on the reference electrode using the potential measuring unit 223 (S1306).

After measuring the potentials, the information reader/writer 224 starts transmitting radio waves (S1307) . In the transmitting, the measuring unit 1101 transmits and receives information between the IC tags 103 mounted on the cartridges and the information reader/writer 224 (S1308). After finishing transmitting and receiving the information, the information reader/writer 224 ends transmitting radio waves (S1309). The concentrations of ions contained in the internal standard solution are determined from the resulting potentials obtained from the operation of measuring the internal standard solution, the sensitivity of the slope, and the potential of the standard solution.

### (3-2-3) Third exemplary operation (measurement of the specimen)

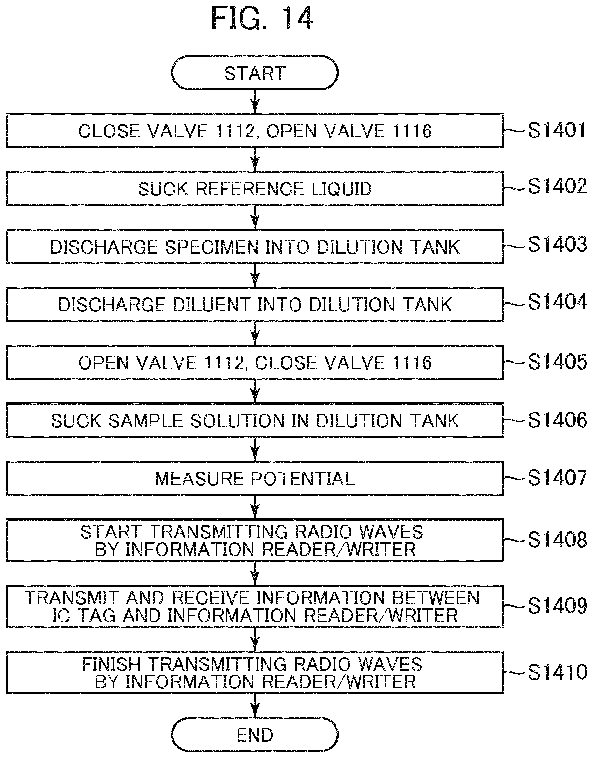

Fig. 14 illustrates an exemplary operation in the case of measuring the specimen. First, the measuring unit 1101 closes the valve 112 and opens the valve 1116 (S1401) . Subsequently, the measuring unit 1101 sucks the reference liquid 1119 from the reference liquid container 1118 using the pump 222 (S1402) . Thus, the passage 102 of the reference electrode cartridge 220, the tube 1114, and the junction 1113 are filled with the reference liquid 1119. After this, the measuring unit 1101 discharges the specimen into the dilution tank 211 using the specimen dispensing nozzle 212 (S1403). Subsequently, the measuring unit 1101 discharges the diluent into the dilution tank 211 using the diluent dispensing nozzle 213 (S1404). Thus, the specimen is diluted. Note that, a method that does not dilute the specimen with the diluent can also be adopted. In this case, the operation in S1404 is omitted.

After this, the measuring unit 1101 opens the valve 1112 and closes the valve 1116 (S1405). Subsequently, the measuring unit 1101 sucks the sample solution in the dilution tank 211 using the suction nozzle 215 and the pump 222 (S1406) . Thus, the passages 102 of the sodium ion selective electrode cartridge 217, the potassium ion selective electrode cartridge 218, and the chloride ion selective electrode cartridge 219, the tube 1111, and the junction 1113 are filled with the sample solution containing the specimen.

At this time, the ion selective electrode cartridge is connected to the reference electrode cartridge 220 through the tubes 111 and 1114 and the junction 1113 filled with the solution. Therefore, the measuring unit 1101 enables the measurement of the potentials of the electrodes of the ion selective electrode cartridges based on the reference electrode using the potential measuring unit 223 (S1407).

After measuring the potentials, the information reader/writer 224 starts transmitting radio waves (S1408) . In the transmitting, the measuring unit 1101 transmits and receives information between the IC tags 103 mounted on the cartridges and the information reader/writer 224 (S1409). After finishing transmitting and receiving the information, the information reader/writer 224 ends transmitting radio waves (S1410). As described above, the concentrations of ions in the specimen are determined from the resulting potentials obtained from the operation of measuring the specimen, the sensitivity of the slope, and the potential and the concentration of the internal standard solution as well as in consideration of the dilution ratio as necessary.

### (3-2-4) Fourth exemplary operation (another example of transmission timing)

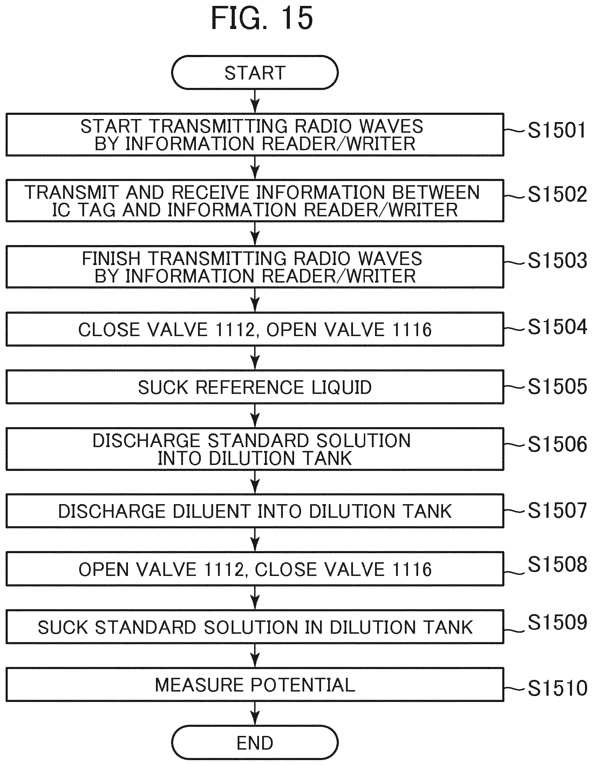

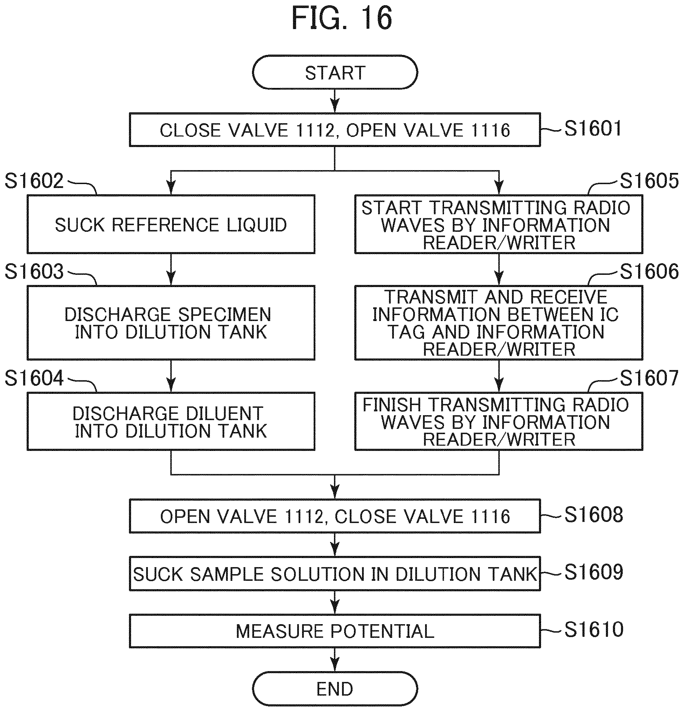

The timing of transmitting and receiving information is not limited after the measurement of the standard solution, the internal standard solution, and the specimen as in the first to the third exemplary operations. Any timing is possible as long as the period of measuring the potential does not overlap the period of transmitting radio waves or the periods of opening and closing the valves. For example, as illustrated in Fig. 15, radio waves may be transmitted before measuring the potential. Alternatively, as illustrated in Fig. 16, a configuration may be provided in which radio waves are transmitted in parallel with pre-processing of potential measurement (discharging/sucking the solution) and the pre-processing and transmitting periods do not overlap the periods of opening and closing the valves and the period of measuring the potential. Here, the reason why the periods of opening and closing the valves do not overlap the period of measuring the potential is that communications are not affected by induced currents generated in association with the mechanical operation of the valves. In Figs. 15 and 16, the case of measuring the standard solution is shown as an example. However, in the case of measuring the internal standard solution or the specimen, instead of the standard solution, radio waves are similarly transmitted.

### (3-2-5) Fifth exemplary operation (continuous measurement)

In the first to the third exemplary operations, the standard solution, the internal standard solution, and the specimen are separately measured. However, these measurements may be performed as a series of flows similarly in the case of Example 1. In this case, information about the nth measurement can also be transmitted and received before the n+1st measurement. Information may be transmitted and received at idle time (standby time) that is timing at which a series of measurements is interrupted.

### (3-3) Subconclusion

With the use of the ion concentration measurement device 1100 according to the example, information relating to the device, its use conditions, and any other information can be recorded on or read from the IC tag 103 with no degradation of high measurement accuracy. Information other than the measurement period (the measurement period of the potential difference) of the ion concentration can be used for reading and writing information on the IC tag 103. Thus, this enables efficient measurement work. Since information can also be frequently updated, the latest information can be acquired all the time and reflected to the operation of the device.

### (4) Other examples

### (4-1) Specimen

In the foregoing Examples 1 and 2, a blood serum is used as an example of a specimen targeted for measurement. However, in addition to this, examples of specimens include solutions derived from living bodies that are cell extracts and body fluids, such as blood, blood plasma, cerebrospinal fluid, urine, gastric juice, intestinal juice, bile, saliva, and tears and include solutions used for medical treatment, such as dialyzate solution, infusion, nutritional supplement, and medicine. These solutions can be measured in configurations and with procedures similar to the measurement of a blood serum.

### (4-2) Electromagnetic shield

In the foregoing Examples 1 and 2, the case was described where the electromagnetic shield was applied to the housing of the measuring unit. The purpose is to reduce the influence of external electromagnetic noise. Note that, in Examples 1 and 2, the case is described where one measuring unit is mounted on one ion concentration measurement device. However, the case is also considered where a plurality of measuring units are placed on one ion concentration measurement device. The case is also assumed where the ion concentration measurement device is included as a part of a biochemical automatic analyzer. In these cases, electromagnetic noise from another nearby measuring unit is likely to adversely affect reading and writing information between the information reader/writer 224 and the IC tag 103.

The ion concentration measurement device is mainly placed on clinical examination divisions of medical institutions or examination centers. In these places, a large number of measurement devices are likely to be placed other than the ion concentration measurement device. Because of this, a large amount of electromagnetic noise may be generated from these measurement devices and IC tags mounted on the measurement devices. With automated clinical examinations nowadays, in many cases, RFID tags are mounted on specimen containers, such as blood collection tubes, urine collection tubes, and test tubes. Electromagnetic noise emitted from these tags is unignorable.

A reduction in external electromagnetic noise enables the prevention of reading and writing faulty information with the IC tags 103 on the cartridges mounted on the measuring unit. A reduction in external electromagnetic noise also enables the prevention of reading and writing faulty information with the IC tags 103 on the cartridges that are not mounted on the measuring unit. The electromagnetic shield only has to be able to reduce electromagnetic noise that is likely to adversely affect reading and writing information with the IC tag 103. Examples of configurations that can be used include metal plates, wire nets, metal films, metal spraying, conductive coating, and conductive plastic.

### (4-3) Places to mount the IC tag

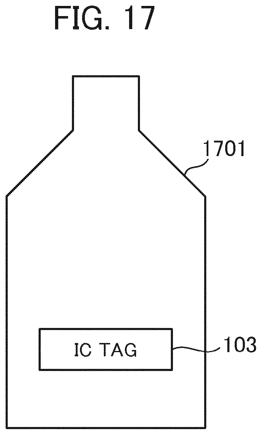

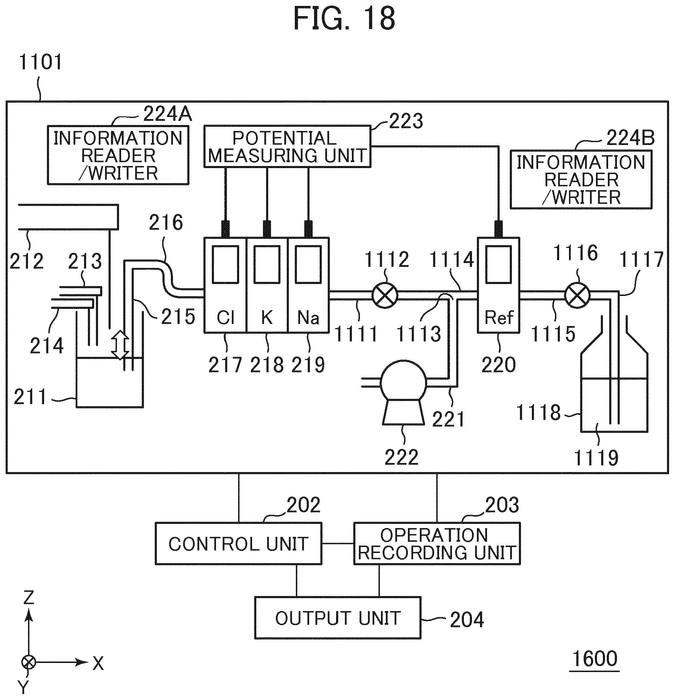

In the foregoing Examples 1 and 2, an example in which the IC tag 103 is mounted on each of the cartridges. However, the IC tag 103 may be mounted only on the ion selective electrode cartridge. As illustrated in Fig. 17, the IC tag 103 may be mounted on reagent containers 1701 to store the internal standard solution, the diluent, and the reference liquid, for example. In the case where the IC tag 103 is mounted on both of the cartridge 101 and the reagent container 1701, only one information reader/writer 224 may be mounted on the ion concentration measurement device 1100 as illustrated in Fig. 11, or two information reader/writers may be mounted on an ion concentration measurement device 1600 as illustrated in Fig. 18. Note that, positions to mount information reader/writers 224A and 224B are options.

### (4-4) Internet connection

In the foregoing Examples 1 and 2, the case is described where the ion concentration measurement device is independently used. A configuration may be provided in which a semiconductor memory configuring the IC tag 103 is manageable as a drive on the Internet.

### (4-5) First information reader/writer

In the foregoing Examples 1 and 2, the case was described where a dedicated information reader/writer was placed in the measuring unit. However, a general-purpose portable information processing device including a smartphone and a tablet terminal, for example, may be mounted. A general-purpose portable information processing device may be attached to and detachable from the measuring unit, not fixed.

### (4-6) Second information reader/writer

In the foregoing Examples 1 and 2, since the semiconductor memory configuring the IC tag 103 is readable and writable, the information reader/writer 224 that reads and writes information relating to the measurement of ion concentrations on the IC tag 103 was mounted on the measuring unit. However, in the case where the semiconductor memory assumed as the IC tag 103 is a ROM, an information reader only has to be placed in the measuring unit. In addition to an information reader (device) exclusive use for reading information, an information writer (device) exclusive use for writing information may be separately mounted on the measuring unit.

### (4-7) Wired communication mode

In the foregoing Examples 1 and 2, the case was described where the information reader/writer 224 transmitted radio waves with the IC tag 103 (i.e., the information reader/writer 224 communicates in wireless communication mode). However, a configuration may be provided in which using an IC tag 103 having an electrical contact in wired communication mode, the IC tag 103 communicates with the information reader/writer 224 in wired communication mode.

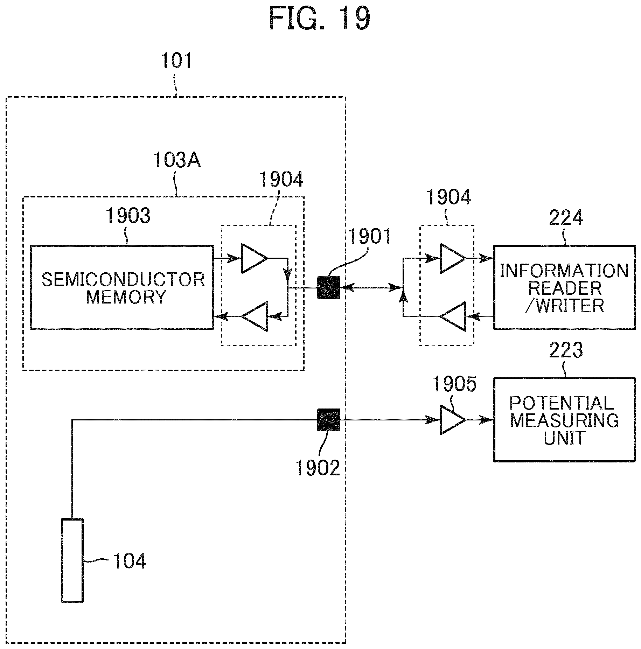

Fig. 19 illustrates an example of a cartridge 101 corresponding to wired communication mode. In the case of Fig. 19, the cartridge 101 includes two terminals 1901 and 1902. The terminal 1901 is dedicated to reading and writing information on an IC tag 103A. The terminal 1902 is used for measuring potential. The IC tag 103A is configured of a semiconductor memory 1903 and a transceiver 1904. Information is read and written on the IC tag 103A through a transceiver 1904 on the information reader/writer 224 side. The output signal of the internal electrode 104 is amplified by an amplifier 1905 connected to the terminal 1902, and supplied to a potential measuring unit 223.

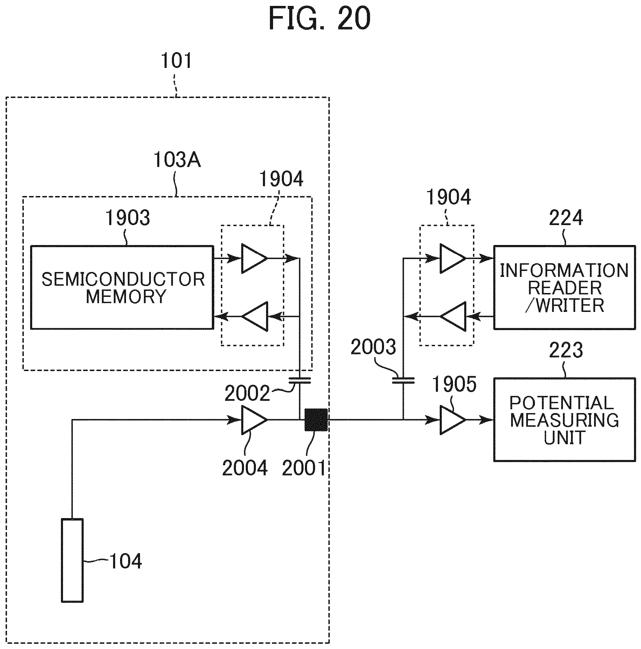

Fig. 20 illustrates another example of a cartridge 101 corresponding to wired communication mode. In the case of Fig. 20, the cartridge 101 includes only one terminal 2001. In other words, in the cartridge 101 illustrated in Fig. 20, reading and writing information (digital signals) and reading output signals (analog signals) of the internal electrode 104 are performed through one terminal 2001 in a time sharing manner. The signal path used for reading and writing information (digital signals) is separated from the signal path of the output signals of the internal electrode 104 by a capacitor 2002. The frequency component of information (digital signals) can pass through the capacitor 2002 because the frequency component is high, whereas the output signals of the internal electrode 104 (the analog signal) fail to pass through the capacitor 2002 because the output signals are basically direct current components. Also in the outside of the cartridge 101, two signal paths are separated by a capacitor 2003. Note that, in the case of the configuration in Fig. 20, an amplifier 2004 is connected on the signal path on the internal electrode 104 side, in order to output output signals (analog signals) with sufficient strength to the terminal 2001.

### (4-8) Noise reduction method other than time sharing mode

In the foregoing Examples 1 and 2, noise is prevented from being mixed in the measurement result by avoiding the overlap of "the timing of reading and writing information" with "the timing of measuring the potential of the internal electrode 104" (i.e., by time sharing communication mode). However, in addition to time sharing communication mode, frequency division, time sharing mode based on the difference in signal level, and code division can be combined. Of course, a method may be possible with which the communication band is transmitted in segmenting multiplex mode and is separated after received (communication band segmenting multiplex mode) . The combination of the methods described above enables a reduction of noise mixture to low level without limit.

### (4-9) Ion species targeted for measurement

The ion concentration measurement devices according to the foregoing Examples 1 and 2 are applicable to measuring the concentrations of given ion species, not limited to measuring the concentrations of the foregoing ion species.

### (4-10) Others

The present invention is defined by the appended claims and is not limited to the examples described above, and includes various modifications. The examples described above are described in detail for easily understanding the present invention. The present invention is not necessarily limited to the examples having all the described configurations. A part of the example can be removed, can be replaced with the configuration of another example, or can additionally include the configuration of another example.

Some or all of the configurations, the functions, the processing unit, the processing methods, and other components described above may be implemented with hardware by designing them using an integrated circuit, for example. The configurations, functions, and other components may be implemented by a processor that interprets and executes programs implementing the functions (i.e., by software). Information, such as programs to implement functions, tables, and files, can be stored on a storage device, such as a memory, a hard disk, and an SSD (Solid State Drive), or on a storage medium, such as an IC card, an SD card, and a DVD. Control lines and information lines are lines that can be considered to be needed for description. These lines do not indicate all of control lines and information lines necessary for products. Actually, almost all the configurations can be considered to be in connection to each other.

### List of Reference Signs

- 101: cartridge
- 102: passage
- 103, 103A: IC tag
- 104: internal electrode
- 105: internal solution
- 106: sensitive membrane
- 106A: reference electrode membrane
- 201, 1101: measuring unit
- 202: control unit
- 203: operation recording unit
- 204: output unit
- 211: dilution tank
- 212: specimen dispensing nozzle
- 213: diluent dispensing nozzle
- 214: internal standard solution dispensing nozzle
- 215: suction nozzle
- 216, 221, 1111, 1114, 1115, 1117: tube
- 217: sodium ion selective electrode cartridge
- 218: potassium ion selective electrode cartridge
- 219: chloride ion selective electrode cartridge
- 220: reference electrode cartridge
- 222: pump
- 223: potential measuring unit
- 224, 224A, 224B: information reader/writer
- 1112, 1116: valve
- 1113: junction
- 1118: reference liquid container
- 1119: reference liquid
- 1701: reagent container
- 1901, 1902, 2001: terminal
- 1903: semiconductor memory
- 1904: transceiver
- 1905, 2004: amplifier
- 2002, 2003: capacitor

## Claims

1. An ion concentration measurement device comprising:
at least one first cartridge (217-219) in contact with a passage (102) or a container (101A) into which a measurement solution containing a target substance to be measured is introduced, the at least one first cartridge having
a first electrode (104) configured to measure continuously a concentration of an ion contained in the measurement solution, and
an RFID tag (103) of semi-active type, which includes a semiconductor memory configured to store information relating to measuring a concentration of an ion and which is configured not to emit electromagnetic wave signals unless an electromagnetic wave signal of a certain level or more is received from the outside;
a second cartridge (220) having a second electrode, wherein the second cartridge (220) is in contact with the passage (102) or the container (101A);
a potential measuring unit (223) configured to measure a potential difference between the first electrode and the second electrode;
an information reader (224) configured to communicate with the RFID tag and to read information from the semiconductor memory; and
a control unit (202) configured to control a first period in which the information reader communicates with the RFID tag so as not to overlap a second period in which the potential measuring unit measures the potential difference.

2. The ion concentration measurement device according to claim 1, further comprising an information writer (224) configured to communicate with the RFID tag and to write the information on the semiconductor memory that enables writing data,
wherein the control unit (202) is configured to control a third period in which the information writer communicates with the RFID tag so as not to overlap the second period.

3. The ion concentration measurement device according to claim 2,
wherein the information is information in transportation and storage and/or information acquired or updated at each measurement.

4. The ion concentration measurement device according to claim 1,
wherein the device further comprises a valve (1112, 1116) and the control unit (202) is configured to control a third period in which the valve is opened and closed so as not to overlap the second period.

5. The ion concentration measurement device according to claim 1,
wherein the information is information unique to the first electrode (104) and/or the second electrode determined when manufactured and/or information unique to the passage (102) or the container (101A).

6. The ion concentration measurement device according to claim 1,
wherein the second cartridge (220) has a second RFID tag of semi-active type, which includes a second semiconductor memory configured to store the information and which is configured not to emit electromagnetic wave signals unless an electromagnetic wave signal of a certain level or more is received from the outside.

7. The ion concentration measurement device according to claim 1,
wherein the first cartridge (217-219) and the second cartridge (220) are attachable to and detachable from a device main body or the RFID tag (103) is attachable to and detachable from the first cartridge and the second cartridge.

8. The ion concentration measurement device according to claim 1, further comprising an electromagnetic shield configured to reduce external electromagnetic noise.

9. The ion concentration measurement device according to claim 1, further comprising a reagent container (1701) having a second RFID tag of semi-active type, which includes a second semiconductor memory configured to store information relating to measuring a concentration of a specific ion and which is configured not to emit electromagnetic wave signals unless an electromagnetic wave signal of a certain level or more is received from the outside,
wherein the control unit (202) is configured to control a third period in which the information is communicated with the second semiconductor memory so as not to overlap the second period.

10. The ion concentration measurement device according to claim 1,
wherein the information reader (224) is configured to communicate with the RFID tag (103) in wireless communication mode.

11. The ion concentration measurement device according to claim 1,
wherein a plurality of the first cartridges (217-219) are configured in an integrated cartridge; and
the RFID tag (103) is mounted on the integrated cartridge as a single RFID tag.

12. The ion concentration measurement device according to claim 1,
wherein the second cartridge (220) and one or a plurality of the first cartridges (217-219) are configured in one integrated cartridge; and
the RFID tag (103) is mounted on the integrated cartridge as a single RFID tag.

13. The ion concentration measurement device according to claim 1,
wherein the information reader (224) is configured to communicate the information by any one of frequency division, time sharing mode based on the difference in signal level, and code division, or by combination of these modes, or by communication band segmenting multiplex mode.

14. The ion concentration measurement device according to claim 2,
wherein the information writer (224) is configured to communicate the information by any one of frequency division, time sharing mode based on the difference in signal level, and code division, or by combination of these modes, or by communication band segmenting multiplex mode.

15. The ion concentration measurement device according to claim 1,
wherein the control unit (202) is configured to control the potential measuring unit (223) to measure a standard solution, an internal standard solution, and the measurement solution continuously; and
in measurements of the standard solution, the internal standard solution, and the measurement solution, the control unit is configured to control a first period in which the information reader (224) communicates with the RFID tag (103) so as not to overlap a second period in which the potential measuring unit measures the potential difference.

16. The ion concentration measurement device according to claim 1,
wherein the control unit (202) is configured to control the potential measuring unit (223) to perform a plurality of measurements continuously; and
the control unit (202) is configured to control the plurality of measurements in a manner to provide a first period that does not overlap the second period in which the information reader (224) communicates with the RFID tag (103) so as not to overlap the second period in which the potential measuring unit measures the potential difference.

17. The ion concentration measurement device according to claim 1,
wherein the information reader (224) is configured to read one or more pieces of information selected from an ion type that is information unique to an electrode determined when manufactured, a lot number, a serial number, an expiration date, a date of manufacture, a correct output range, an alarm condition, a temporal profile of temperature, temporal profiles of humidity, atmospheric pressure, and acceleration that are information in transportation and storage, and a measurement facility, a measuring device, a person in charge of measurement, a measurement channel, a measurement date and time, types and compositions of used agents being a standard solution and a diluent, pH, reaction time, stirring time, an aliquot quantity of a sample, an amount of a diluent, a dilution factor, an amount of an introduction solution, introduction time, an introduction flow, an introduction flow rate, temperature, humidity, pressure, measurement cycle time, measurement wait time, data acquisition time, a number of times of data acquisition, potential, a concentration of an ion that is a measurement result, impedance and resistance of an electrode, a number of samples to be measured, sensitivity of a slope, potential stability, repeatability, selectivity, a correction factor, a time response characteristic, sensitivity, a calibration curve remeasurement condition, a data processing algorithm, and a replacement parts that are information acquired or updated every time when measured.

18. The ion concentration measurement device according to claim 1,
wherein the first period is a period in which the information is transmitted and communicated from the information reader (224) to the RFID tag (103).

## Patentansprüche

1. lonenkonzentration-Messvorrichtung, umfassend:
mindestens eine erste Kassette (217-219) in Kontakt mit einer Passage (102) oder einem Behälter (101A), in die oder den eine Messlösung, die eine zu messende Zielsubstanz enthält, eingeführt ist, wobei die mindestens eine erste Kassette aufweist:
eine erste Elektrode (104), die dazu eingerichtet ist, eine Konzentration eines in der Messlösung enthaltenen Ions fortlaufend zu messen, und
eine RFID-Kennzeichnung (103) vom semi-aktiven Typ, die einen Halbleiterspeicher enthält, der zum Speichern von sich auf die Messung einer Konzentration eines Ions beziehenden Informationen eingerichtet ist, und die dazu eingerichtet ist, keine elektromagnetischen Wellensignale zu emittieren, bis ein elektromagnetisches Wellensignal eines bestimmten Niveaus oder darüber von außen empfangen wird;
eine zweite Kassette (220) mit einer zweiten Elektrode, wobei die zweite Kassette (220) in Kontakt mit der Passage (102) oder dem Behälter (101A) steht;
eine Potenzialmesseinheit (223), die dazu eingerichtet ist, eine Potenzialdifferenz zwischen der ersten Elektrode und der zweiten Elektrode zu messen;
eine Informationsleseeinrichtung (224), die dazu eingerichtet ist, mit der RFID-Kennzeichnung zu kommunizieren und Informationen aus dem Halbleiterspeicher zu lesen; und
eine Steuereinheit (202), die dazu eingerichtet ist, einen ersten Zeitraum, in dem die Informationsleseeinrichtung mit der RFID-Kennzeichnung kommuniziert, so zu steuern, dass er nicht mit einem zweiten Zeitraum überlappt, in dem die Potenzialmesseinheit die Potenzialdifferenz misst.

2. lonenkonzentration-Messvorrichtung nach Anspruch 1, ferner umfassend eine Informationsschreibeinrichtung (224), die dazu eingerichtet ist, mit der RFID-Kennzeichnung zu kommunizieren und die Informationen in den Halbleiterspeicher, der das Schreiben von Daten ermöglicht, zu schreiben,
wobei die Steuereinheit (202) dazu eingerichtet ist, einen dritten Zeitraum, in dem die Informationsschreibeinrichtung mit der RFID-Kennzeichnung kommuniziert, so zu steuern, dass er nicht mit dem zweiten Zeitraum überlappt.

3. lonenkonzentration-Messvorrichtung nach Anspruch 2,
wobei die Informationen Informationen über Transport und Speicherung und/oder Informationen, die bei jeder Messung erfasst oder aufdatiert werden, sind.

4. lonenkonzentration-Messvorrichtung nach Anspruch 1,
wobei die Vorrichtung ferner ein Ventil (1112, 1116) umfasst und die Steuereinheit (202) dazu eingerichtet ist, einen dritten Zeitraum, in dem das Ventil geöffnet und geschlossen wird, so zu steuern, dass er nicht mit dem zweiten Zeitraum überlappt.

5. lonenkonzentration-Messvorrichtung nach Anspruch 1,
wobei die Informationen einzig auf die erste Elektrode (104) und/oder die zweite Elektrode bezogene Informationen, die bei der Herstellung bestimmt werden, und/oder einzig auf die Passage (102) oder den Behälter (101A) bezogene Informationen sind.

6. lonenkonzentration-Messvorrichtung nach Anspruch 1,
wobei die zweite Kassette (220) eine zweite RFID-Kennzeichnung vom semi-aktiven Typ aufweist, die einen zweiten Halbleiterspeicher enthält, der dazu eingerichtet ist, die Informationen zu speichern, und die dazu eingerichtet ist, keine elektromagnetischen Wellensignale zu emittieren, bis ein elektromagnetisches Wellensignal eines bestimmten Niveaus oder darüber von außen erhalten wird.

7. lonenkonzentration-Messvorrichtung nach Anspruch 1,
wobei die erste Kassette (217-219) und die zweite Kassette (220) an einem Vorrichtungshauptkörper angebracht und von diesem abgenommen werden können, oder die RFID-Kennzeichnung (103) an der ersten Kassette und der zweiten Kassette angebracht und von diesen abgenommen werden kann.

8. lonenkonzentration-Messvorrichtung nach Anspruch 1, ferner umfassend eine elektromagnetische Abschirmung, die dazu eingerichtet ist, externes elektromagnetisches Rauschen zu verringern.

9. lonenkonzentration-Messvorrichtung nach Anspruch 1, ferner umfassend einen Reagenzienbehälter (1701) mit einer zweiten RFID-Kennzeichnung vom semi-aktiven Typ, die einen zweiten Halbleiterspeicher enthält, der zum Speichern von sich auf die Messung einer Konzentration eines spezifischen Ions beziehenden Informationen eingerichtet ist, und die dazu eingerichtet ist, keine elektromagnetischen Wellensignale zu emittieren, bis ein elektromagnetisches Wellensignal eines bestimmten Niveaus oder darüber von außen erhalten wird,
wobei die Steuereinheit (202) dazu eingerichtet ist, einen dritten Zeitraum, in dem die Informationen mit dem zweiten Halbleiterspeicher kommuniziert werden, so zu steuern, dass er nicht mit dem zweiten Zeitraum überlappt.

10. lonenkonzentration-Messvorrichtung nach Anspruch 1,
wobei die Informationsleseeinrichtung (224) dazu eingerichtet ist, mit der RFID-Kennzeichnung (103) in einem drahtlosen Kommunikationsmodus zu kommunizieren.

11. lonenkonzentration-Messvorrichtung nach Anspruch 1,
wobei mehrere der ersten Kassetten (217-219) in einer integrierten Kassette eingerichtet sind; und
die RFID-Kennzeichnung (103) auf der integrierten Kassette als eine einzige RFID-Kennzeichnung angebracht ist.

12. lonenkonzentration-Messvorrichtung nach Anspruch 1,
wobei die zweite Kassette (220) und eine oder mehrere der ersten Kassetten (217-219) in einer integrierten Kassette eingerichtet sind; und
die RFID-Kennzeichnung (103) auf der integrierten Kassette als eine einzelne RFID-Kennzeichnung angebracht ist.

13. lonenkonzentration-Messvorrichtung nach Anspruch 1,
wobei die Informationsleseeinrichtung (224) dazu eingerichtet ist, die Informationen mittels irgendeinem von Frequenzunterteilung, Zeitaufteilungsmodus auf der Grundlage der Differenz im Signalniveau und Code-Unterteilung oder durch Kombination dieser Modi oder durch einen Multiplexmodus zur Kommunikationsbandsegmentierung zu kommunizieren.

14. lonenkonzentration-Messvorrichtung nach Anspruch 2,
wobei die Informationsschreibeinrichtung (224) dazu eingerichtet ist, die Informationen mittels irgendeinem von Frequenzunterteilung, Zeitaufteilungsmodus auf der Grundlage der Differenz im Signalniveau und Code-Unterteilung oder durch Kombination dieser Modi oder durch einen Multiplexmodus zur Kommunikationsbandsegmentierung zu kommunizieren.

15. lonenkonzentration-Messvorrichtung nach Anspruch 1,
wobei die Steuereinheit (202) dazu eingerichtet ist, die Potenzialmesseinheit (223) dahingehend zu steuern, dass sie eine Standardlösung, eine interne Standardlösung und die Messlösung fortlaufend misst; und
die Steuereinheit bei Messungen der Standardlösung, der internen Standardlösung und der Messlösung dazu eingerichtet ist, einen ersten Zeitraum, in dem die Informationsleseeinrichtung (224) mit der RFID-Kennzeichnung (103) kommuniziert, so zu steuern, dass er nicht mit einem zweiten Zeitraum überlappt, in dem die Potenzialmesseinheit die Potenzialdifferenz misst.

16. lonenkonzentration-Messvorrichtung nach Anspruch 1,
wobei die Steuereinheit (202) dazu eingerichtet ist, die Potenzialmesseinheit (223) dahingehend zu steuern, dass sie mehrere Messungen fortlaufend durchführt; und
die Steuereinheit (202) dazu eingerichtet ist, die mehreren Messungen auf eine solche Weise zu steuern, dass ein erster Zeitraum, der nicht mit dem zweiten Zeitraum, in dem die Informationsleseeinrichtung (224) mit der RFID-Kennzeichnung (103) kommuniziert, überlappt, so vorgesehen wird, dass er nicht mit dem zweiten Zeitraum, in dem die Potenzialmesseinheit die Potenzialdifferenz misst, überlappt.

17. lonenkonzentration-Messvorrichtung nach Anspruch 1,
wobei die Informationsleseeinrichtung (224) dazu eingerichtet ist, eine oder mehrere Einheiten von Informationen zu lesen, die ausgewählt sind aus einem Ionen-Typ, der eine bei der Herstellung bestimmte einzig auf eine Elektrode bezogene Information ist, einer Liefernummer, einer Seriennummer, einem Ablaufdatum, einem Herstellungsdatum, einem korrekten Ausgabebereich, einer Alarmbedingung, einem zeitlichen Temperaturprofil, zeitlichen Feuchtigkeitsprofilen, Atmosphärendruck und Beschleunigung, die Informationen zu Transport und Speicherung sind, und einer Messanlage, einer Messvorrichtung, einer für die Messung verantwortlichen Person, einem Messkanal, Messdatum und -uhrzeit, Typen und Zusammensetzung verwendeter Wirkstoffe, die eine Standardlösung und ein Verdünnungsmittel sind, pH-Wert, Reaktionszeit, Umrührzeit, einer Teilprobenmenge einer Probe, einer Menge eines Verdünnungsmittels, einem Verdünnungsfaktor, einer Menge einer Einführungslösung, einer Einführungszeit, einer Einführungsströmung, einer Einführungsströmungsrate, Temperatur, Feuchtigkeit, Druck, einer Messzyklenzeit, einer Messwartezeit, einer Datenerfassungszeit, einer Anzahl von Datenerfassungsvorgängen, einem Potenzial, einer Konzentration eines Ions, das ein Messziel ist, Impedanz und Widerstand einer Elektrode einer Anzahl von zu messenden Proben, einer Sensitivität eines Steigungsmaßes, einer Potenzialstabilität, einer Wiederholbarkeit, einer Auswählbarkeit, einem Korrekturfaktor, einer Zeitantwort-Charakteristik, einer Sensitivität, einer Bedingung zur Neumessung einer Kalibrierungskurve, einem Datenverarbeitungsalgorithmus und Ersatzteilen, die Informationen sind, die jedes Mal, wenn gemessen wird, erfasst oder aufdatiert werden.

18. lonenkonzentration-Messvorrichtung nach Anspruch 1,
wobei der erste Zeitraum ein Zeitraum ist, in dem die Informationen von der Informationsleseeinrichtung (224) an die RFID-Kennzeichnung (103) übertragen und kommuniziert werden.

## Revendications

1. Dispositif de mesure de concentration d'ion comprenant :
au moins une première cartouche (217-219) en contact avec un passage (102) ou un récipient (101A) dans lequel une solution de mesure est introduite contenant une substance cible devant être mesurée, l'au moins une première cartouche ayant
une première électrode (104) configurée pour mesurer en continu une concentration d'un ion contenu dans la solution de mesure, et
une étiquette RFID (103) de type semi-actif, qui inclut une mémoire à semi-conducteurs configurée pour stocker des informations se rapportant à la mesure d'une concentration d'un ion et qui est configurée pour ne pas émettre de signaux d'onde électromagnétique à moins qu'un signal d'onde électromagnétique d'un certain niveau ou plus ne soit reçu de l'extérieur ;
une deuxième cartouche (220) ayant une deuxième électrode, dans lequel la deuxième cartouche (220) est en contact avec le passage (102) ou le récipient (101A) ;
une unité (223) de mesure de potentiel configurée pour mesurer une différence de potentiel entre la première électrode et la deuxième électrode ;
un lecteur (224) d'informations configuré pour communiquer avec l'étiquette RFID et pour lire des informations dans la mémoire à semi-conducteurs ; et
une unité (202) de commande configurée pour commander une première période pendant laquelle le lecteur d'informations communique avec l'étiquette RFID de façon à ne pas chevaucher une deuxième période pendant laquelle l'unité de mesure de potentiel mesure la différence de potentiel.

2. Dispositif de mesure de concentration d'ion selon la revendication 1, comprenant en outre un dispositif d'écriture (224) d'informations configuré pour communiquer avec l'étiquette RFID et pour écrire les informations dans la mémoire à semi-conducteurs qui permet l'écriture de données,
dans lequel l'unité (202) de commande est configurée pour commander une troisième période pendant laquelle le dispositif d'écriture d'informations communique avec l'étiquette RFID de façon à ne pas chevaucher la deuxième période.

3. Dispositif de mesure de concentration d'ion selon la revendication 2,
dans lequel les informations sont des informations de transport et de stockage et/ou des informations acquises ou mises à jour à chaque mesure.

4. Dispositif de mesure de concentration d'ion selon la revendication 1,
dans lequel le dispositif comprend en outre une vanne (1112, 1116) et l'unité (202) de commande est configurée pour commander une troisième période pendant laquelle la vanne est ouverte et fermée de façon à ne pas chevaucher la deuxième période.

5. Dispositif de mesure de concentration d'ion selon la revendication 1,
dans lequel les informations sont des informations uniques à la première électrode (104) et/ou la deuxième électrode déterminées à la fabrication et/ou des informations uniques au passage (102) ou au récipient (101A).

6. Dispositif de mesure de concentration d'ion selon la revendication 1,
dans lequel la deuxième cartouche (220) a une deuxième étiquette RFID de type semi-actif, qui inclut une deuxième mémoire à semi-conducteurs configurée pour stocker les informations et qui est configurée pour ne pas émettre de signaux d'onde électromagnétique à moins qu'un signal d'onde électromagnétique d'un certain niveau ou plus ne soit reçu de l'extérieur.

7. Dispositif de mesure de concentration d'ion selon la revendication 1,
dans lequel la première cartouche (217-219) et la deuxième cartouche (220) sont attachables à un et détachables d'un corps principal de dispositif ou bien l'étiquette RFID (103) est attachable à la et détachable de la première cartouche et la deuxième cartouche.

8. Dispositif de mesure de concentration d'ion selon la revendication 1, comprenant en outre un blindage électromagnétique configuré pour réduire un bruit électromagnétique externe.

9. Dispositif de mesure de concentration d'ion selon la revendication 1, comprenant en outre un récipient (1701) pour réactif ayant une deuxième étiquette RFID de type semi-actif, qui inclut une deuxième mémoire à semi-conducteurs configurée pour stocker des informations se rapportant à la mesure d'une concentration d'un ion spécifique et qui est configurée pour ne pas émettre de signaux d'onde électromagnétique à moins qu'un signal d'onde électromagnétique d'un certain niveau ou plus ne soit reçu de l'extérieur,
dans lequel l'unité (202) de commande est configurée pour commander une troisième période pendant laquelle les informations sont communiquées avec la deuxième mémoire à semi-conducteurs de façon à ne pas chevaucher la deuxième période.

10. Dispositif de mesure de concentration d'ion selon la revendication 1,
dans lequel le lecteur (224) d'informations est configuré pour communiquer avec l'étiquette RFID (103) dans un mode de communication sans fil.

11. Dispositif de mesure de concentration d'ion selon la revendication 1,
dans lequel une pluralité des premières cartouches (217-219) sont configurées dans une cartouche intégrée ; et
l'étiquette RFID (103) est monté sur la cartouche intégrée comme une étiquette RFID unique.

12. Dispositif de mesure de concentration d'ion selon la revendication 1,
dans lequel la deuxième cartouche (220) et une ou une pluralité des premières cartouches (217-219) sont configurées dans une cartouche intégrée ; et
l'étiquette RFID (103) est monté sur la cartouche intégrée comme une étiquette RFID unique.

13. Dispositif de mesure de concentration d'ion selon la revendication 1,
dans lequel le lecteur (224) d'informations est configuré pour communiquer les informations par l'un quelconque d'un mode de répartition en fréquence en temps partagé sur la base de la différence de niveau de signaux, et en répartition en code, ou par une combinaison de ces modes, ou par un mode de multiplexage par segmentation de bande de communication.

14. Dispositif de mesure de concentration d'ion selon la revendication 2,
dans lequel le dispositif d'écriture (224) d'informations est configuré pour communiquer les informations par l'un quelconque d'un mode de répartition en fréquence en temps partagé sur la base de la différence de niveau de signaux, et en répartition en code, ou par une combinaison de ces modes, ou par un mode de multiplexage par segmentation de bande de communication.

15. Dispositif de mesure de concentration d'ion selon la revendication 1,
dans lequel l'unité (202) de commande est configurée pour commander l'unité (223) de mesure de potentiel pour mesurer une solution standard, une solution standard interne, et la solution de mesure en continu ; et
lors des mesures de la solution standard, de la solution standard interne, et de la solution de mesure, l'unité de commande est configurée pour commander une première période pendant laquelle le lecteur (224) d'informations communique avec l'étiquette RFID (103) de façon à ne pas chevaucher une deuxième période pendant laquelle l'unité de mesure de potentiel mesure la différence de potentiel.

16. Dispositif de mesure de concentration d'ion selon la revendication 1,
dans lequel l'unité (202) de commande est configurée pour commander l'unité (223) de mesure de potentiel pour effectuer une pluralité de mesures en continu ; et
l'unité (202) de commande est configurée pour commander la pluralité de mesures d'une manière à prévoir une première période qui ne chevauche pas la deuxième période pendant laquelle le lecteur (224) d'informations communique avec l'étiquette RFID (103) de façon à ne pas chevaucher la deuxième période pendant laquelle l'unité de mesure de potentiel mesure la différence de potentiel.

17. Dispositif de mesure de concentration d'ion selon la revendication 1,
dans lequel le lecteur (224) d'informations est configuré pour lire une ou plusieurs informations choisie(s) parmi un type d'ion qui est une information unique pour une électrode déterminée à la fabrication, un numéro de lot, un numéro de série, une date d'expiration, une date de fabrication, une plage de sortie correcte, une condition d'alarme, un profil temporel de température, des profils temporels d'humidité, une pression atmosphérique, et une accélération qui sont des informations de transport et de stockage, et une installation de mesure, un dispositif de mesure, une personne en charge de la mesure, un canal de mesure, une date et une heure de mesure, des types et des compositions d'agents utilisés étant une solution standard et un diluent, un temps de réaction, un temps d'agitation, une quantité d'aliquote d'un échantillon, une quantité d'un diluant, un facteur de dilution, une quantité d'une solution d'introduction, un temps d'introduction, un flux d'introduction, un débit d'introduction, une température, une humidité, une pression, un temps de cycle de mesure, un temps d'attente de mesure, un temps d'acquisition de données, un nombre de fois d'acquisition de données, un potentiel, une concentration d'un ion qui est un résultat de mesure, une impédance et une résistance d'une électrode, un nombre d'échantillons devant être mesurés, une sensibilité d'une pente, une stabilité de potentiel, une répétabilité, une sélectivité, un facteur de correction, une caractéristique de réponse dans le temps, une sensibilité, une condition de remesure de courbe d'étalonnage, un algorithme de traitement de données, et des pièces de rechange qui sont des informations acquises ou mises à jour à chaque fois qu'elles sont mesurées.

18. Dispositif de mesure de concentration d'ion selon la revendication 1,
dans lequel la première période est une période pendant laquelle les informations sont transmises et communiquées du lecteur (224) d'informations à l'étiquette RFID (103).
